# EUROPÄISCHE PATENTANMELDUNG

(11) **EP 0 955 598 A2**
(43) Veröffentlichungstag der Anmeldung: **10.11.1999**
(21) Anmeldenummer: 99108862.6
(22) Anmeldetag: 04.05.1999
(51) Int. Cl.: G06K 7/00

(54) **Smart-Card-Verbinder**

(30) Priorität: 07.05.1998 DE 19820447
(71) Anmelder: AMPHENOL-TUCHEL ELECTRONICS GmbH, D-74080 Heilbronn (DE)
(72) Erfinder: Reichardt, Manfred, 74189 Weinsberg (DE)
(74) Vertreter: Wagner, Karl H., Dipl.-Ing.

(57) **Zusammenfassung**

Die Erfindung bezieht sich auf ein Kartenführung bzw. Rahmenteil insbesondere zur Verwendung mit einem Kontakt oder Simblock und insbesondere zur Anordnung auf einer Leiterplatte unter Verwendung von Kartenführungsmitteln die die Karte beim Einsetzen in die Leseposition führen und unter Verwendung von Kartenhalterungsmitteln die die Karte in der Leseposition fixieren wobei die Kartenhalterungsmittel einen quer zur Karteneinsetzrichtung verlaufenden Anschlagsteg aufweisen, der die Karte in der Leseposition gegen herausziehen sichert.

## Beschreibung

Die vorliegende Erfindung bezieht sich auf sogenannte Chipkartenleser die dazu geeignet sind Chipkarten oder Smart-Cards aufzunehmen und die auf diesen Karten vorgesehenen Kontakte zu kontaktieren. Die Erfindung bezieht sich insbesondere auf einen Chipkartenleser- oder Smart-Card-Leser der unter Verwendung eines Kontaktblockes insbesondere eines Simblockes vorzugsweise auf einer Leiterplatte realisiert wird. Der Chipkartenleser kann auch im amerikanischen Sprachgebrauch als "Smart-Card-Connector" bezeichnet werden, da der amerikanische Begriff "Smart-Card" dem deutschen Begriff "Chipkarte" entspricht. Ferner bezieht sich die Erfindung auf eine Kartenführung, d. h. ein Rahmen- oder Gehäuseteil welches zusammen mit vorzugsweise mit einem Simblock einen Chipkartenleser auf einer Leiterplatte realisiert.

Aus der DE 44 17 087 A1 ist bereits eine Kontaktiereinrichtung bekannt die unter Verwendung eines Kontaktblocks (der auch als Simblock bezeichnet wird) einen Chipkartenleser vorsieht.

In der '087 sind mehrere Ausführungsbeispiele von Chipkartenlesern beschrieben. Bei einem dieser Ausführungsbeispiele ist eine Leiterplatte vorgesehen auf der ein Kontaktblock befestigt ist. Führungsmittel dienen zur Führung der Chipkarte bei deren Bewegung in eine Lesestellung und umgeben in entsprechender Weise dem Kontaktblock, so daß die Kartenkontakte der Chipkarte bei Erreichen der Lesestellung mit den entsprechenden Kontaktelementen des Kontaktblocks ausgerichtet sind. Dabei sind im Kontaktblock auch Kontaktelemente für einen Endlagenschalter vorgesehen. Da der Kontaktblock ein in etwa dem Kontaktfeld einer Simkarte entsprechende Größe besitzt, wird er auch als Simblock bezeichnet. Der Kontaktblock besitzt Befestigungsmittel in der Form von Zapfen, um an der Leiterplatte befestigbar zu sein. Die Führungsmittel der '087 für die Chipkarte bestehen im wesentlichen aus einem im Längsquerschnitt vorzugsweise U-förmigen Rahmen. Diesen Rahmen bilden eine Oberwand, eine erste Seitenwand, eine zweite Seitenwand, eine Vorderwand und eine Rückwand. In den ersten und zweiten Seitenwänden sind jeweils Längsschlitze für die Führung der Karte ausgebildet. In der Rückwand ist ein Ausschnitt vorgesehen, der den Kontaktblock zugänglich macht. Die Oberwand bildet ferner zur Karte hinweisende Führungsanlageflächen, so daß bei Erreichen der Lesestellung die Karte kontaktsicher gegen die Kontaktelemente des Simblocks gedrückt wird. Vorzugsweise sind Zapfen am Rahmen zur Befestigung desselben an der Leiterplatte vorgesehen. Zur Verrastung der Chipkarte in ihrer Lesestellung sind Rastmittel in der Form von Rasthaken an der Oberwand ausgebildet und zwar benachbart zu einem Griffausschnitt der das Entfernen der Karte aus der Lesestellung ermöglicht.

Die vorliegende Erfindung hat sich zum Ziel gesetzt einen Chipkartenleser und insbesondere eine Kartenführung für einen Chipkartenleser derart vorzusehen, daß die Nachteile des Standes der Technik vermieden werden. Insbesondere sollen ausgezeichnete Betriebseigenschaften insbesondere auch bei den Anforderungen wie sie beim Einsatz in einem Kraftfahrzeug auftreten, erreicht werden. Der erfindungsgemäße Chipkartenleser soll ein schock- und vibrationssicheres Rückhaltesystem aufweisen. Seine Bauhöhe sollte gering und maximal 4mm sein. Er sollte eine hohe Einsatz- und Lagertemperatur aushalten. Ferner sollte sein Aufbau wegen der erforderlichen Massenproduktion kostengünstig sein und es sollte maximaler Platz auf der Leiterplatte unterhalb der Kartenführung des Chipkartenlesers für zusätzliche Bauelemente vorgesehen werden.

Die Entnahme der Karte aus dem Chipkartenleser sollte einfach durch Anheben der Kartenkante möglich sein.

Zur Lösung der Aufgabe und der Vermeidung der Nachteile des Standes der Technik sieht die Erfindung einen Chipkartenleser mit einer Kartenführung zur Bildung des Chipkartenlesers (zusammen mit einem Simblock) vor, wobei die Kartenführung ein einstückiges aus Kunststoff hergestelltes Rahmenteil ist, welches sowohl als Kartenführungsmittel, als auch Kartenhalterungsmittel dient, wobei die Kartenhalterungsmittel einen quer zur Karten- oder Leserlängsachse verlaufenden Anschlagsteg bilden.

Bevorzugte Ausgestaltung der Erfindung ergeben sich aus dem Ansprüchen.

Durch die erfindungsgemäßen Maßnahmen wird auch bei "Low cost" Produkten eine Vibrationssicherung erhalten. Ferner kann die erwünschte geringe Bauhöhe durch die erfindungsgemäße Gestaltung der Kartenführungsmittel ohne weiteres eingehalten werden. Durch die erfindungsgemäß an der Kartenführung (Rahmenteil) angeordneten Rastmittel ergibt sich eine leicht auf die Leiterplatte aufrastbare Kartenführung, so daß nach dem Auflöten eines Simblocks vorzugsweise mit Schalter auf die Leiterplatte die erfindungsgemäße Kartenführung einfach auf die Leiterplatte gerastet wird.

Weitere Vorteile Ziele und Einzelheiten der Erfindung ergeben sich aus der Beschreibung von Ausführungsbeispielen anhand von Zeichnungen; in der Zeichnung zeigt:
- Fig. 1: eine Draufsicht auf den erfindungsgemäßen Chipkartenleser bestehend aus der erfindungsgemäßen Kartenführung sowie einem Kontaktblock;
- Fig. 2: einen Schnittlängs Linie 2-2 in Fig. 1;
- Fig. 3: einen Teilschnitt (ohne Kontaktblock) in etwa längs Linie 3-3 in Fig. 1;
- Fig. 4: ein Schnitt ähnlich Fig. 2, wobei dargestellt ist wie der erfindungsgemäße Chipkartenleser im Zusammenhang mit einer Leiterplatte realisiert ist.

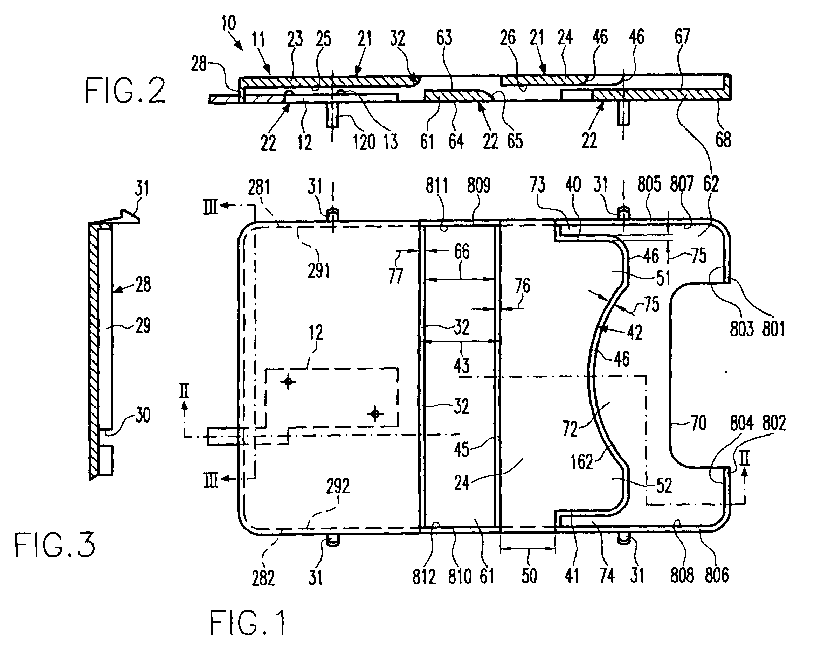

Die Figuren 1 bis 4 zeigen ein bevorzugtes Ausführungsbeispiel der Erfindung. Abwandlungen der gezeigten Bauteile sind im Rahmen der Erfindung dem Fachmann gegeben.

Der erfindungsgemäße Smart-Card-Connector oder Chipkartenleser 10 weist eine vorzugsweise aufrastbare Kartenführung (Rahmenteil) 11 sowie einen Kontakelemente 13 aufweisenden Kontaktblock z. B einen Simblock 12 auf. Der Simblock 12 ist zur Bildung des Chipkartenlesers 10 an einer Leiterplatte 14 in bekannter Weise befestigt und die beispielsweise auf eine Oberfläche aufrastbare Kartenführung 11 dient zur Aufnahme der nicht gezeigten Chipkarte.

Das Rahmenteil 11 weist dazu vorzugsweise seitliche Kartenführungsmittel auf, die die Karte beim Einführen in die Leseposition führen, und ferner Kartenhalterungsmittel die die Karte in der Leseposition fixieren.

Allgemein kann man sagen, daß das Rahmenteil (Kartenführung) 11 (vgl. Fig. 2) obere Karten-Gegenhalterungsmittel (Deckelmittel) 21 sowie untere Karten-Auflagemittel 22 aufweist.

### Die oberen Deckelmittel

Die oberen Deckelmittel 21 weisen einen vorderen Deckelteil 23 und einen hinteren Deckelteil 24 auf. Der Deckelteil 23 bildet eine hintere nach unten weisende Kartengegenhalterungsfläche 25 und der vordere Deckelteil 24 bildet eine vordere nach unten weisende Gegenhalterungsfläche 26. Der Deckelteil 23 bildet vorzugsweise eine abgerundete oder angefaste Vorderkante 32, um das Einführen der Smart-Card in den Chipkartenleser 10 sicherzustellen.

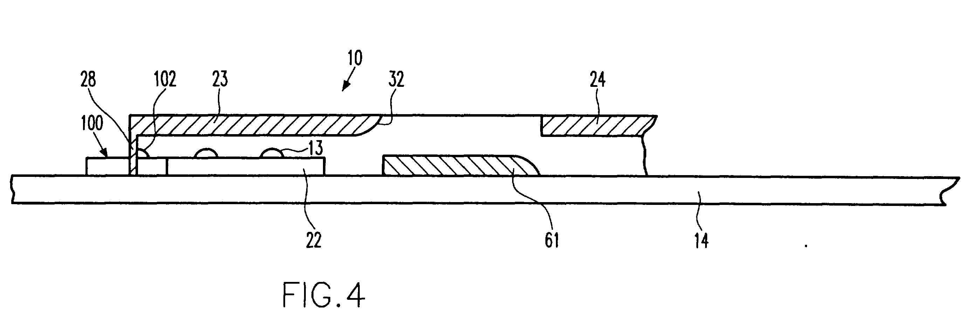

Bevor auf die unteren Auflagemittel 22 eingegangen sei, sei eine Anlagewand 28 erwähnt, die wie in Figur 3 gezeigt eine Anschlagfläche 29 für die Karte in ihrer Leseposition aufweist. In der Anlagewand 28 ist eine Aussparung 30 vorzugsweise für einen Schalter, vorgesehen. Ferner erkennt man in Figur 3 eines der vier (vgl. Fig. 5) vorzugsweise in der Form von Rasthaken 31 ausgebildeten Rastmittel die zur Rast-Befestigung des Rahmenteils 11 an einer Leiterplatte 14 wie sie in Figur 4 gezeigt ist dient.

Der hintere Deckelteil 24 weist einen mit 50 bezeichneten Querstegteil auf der über die gesamte Breite der Kartenführung 11 verläuft. Ferner sind Ausschnitte (Hinterschneidungen) 40, 41 an den Seiten des Deckelteils 24 vorgesehen, so daß Vorsprünge 51, 52 entstehen, zwischen denen ein Griffausschnitt 42 gebildet ist. Die Hinterkante 45 des Querstegteils 50 ist mit einem Abstand 43 gegenüber der abgerundeten Vorderkante 32 angeordnet. Zwischen diesen Kanten 45, 32 blickt man in Figur 1 auf ein noch zu beschreibendes mittleres Auflageteil 61.

### Die unteren Auflagemittel

Die unteren Auflagemittel 22 weisen neben dem eben genannten mittleren Auflageteil 61 noch ein davon beabstandetes hinteres Auflageteil 62 auf. Ferner dient der Simblock 12 vorzugsweise als ein hinteres Auflageteil, der unteren Auflagemittel 22.

Das mittlere Auflageteil 61 bildet eine obere Auflagefläche 63 für die Karte und eine untere Auflagefläche 64 zur Auflage auf der Leiterplatte 14 gemäß Figur 4. Ferner bildet das mittlere Auflageteil 61 eine abgerundete Vorderkante 65. Die Länge des mittleren sich mit seiner Breite über die Gesamtbreite des Lesers 10 erstreckenden Auflageteils 61 ist mit 66 bezeichnet.

Der hintere (untere) Auflageteil 62 erstreckt sich in seinem mittleren Bereich über die Breite der Kartenführung 11 hinweg und besitzt wie in Figur 2 gezeigt eine obere Auflagefläche 67 und eine untere Auflagefläche 68 sowie einen im ganzen rechteckigen Griffausschnitt 70. Ein gewölbter Teil 72 erstreckt sich in Richtung des Griffausschnitts 42. Der hintere Auflageteil 62 hat Vorsprünge 73 und 74 die sich in den Bereich der Ausschnitte 40, 41, aber natürlich, wie in Figur 2 gezeigt auf einem niedrigen Niveau erstrecken. Zwischen der Hinterkante 46 des mittleren Auflageteils 24 und der Vorderkante 162 des hinteren Auflageteils 62 ist vorzugsweise ein Spalt 75 gebildet, der wie auch die anderen noch zu erwähnenden Spalte 76 und 77 die Herstellung der Kartenführung 11 kostengünstig ermöglicht.

### Seitliche Führungs- und Halterungsmittel

Die eine Halterung der Karte in der Leseposition nach oben bzw. unten bewirkenden Gegenhalterungsmittel 21 und Auflagemittel 22 dienen auch als Führungsmittel in einer Richtung senkrecht zur Einschubrichtung der Karte beim Einsetzen der Karte in deren Leseposition. Darüber hinaus sind seitliche Führungsmittel vorgesehen, die auch als seitliche Halterungsmittel bei eingesetzter Karte wirken. Ferner sind Mittel vorgesehen, um die Karte in ihrer Lesposition zu haltern.

Von diesen letztgenannten Halterungsmitteln wurde bereits die Anlagewand 28 erwähnt. Die der Anlagewand 28 entsprechenden Halterungsmittel gegenüber einer Bewegung der Chipkarte aus der Leseposition heraus sind im dargestellten Ausführungsbeispiel durch die hochragenden Wände oder Stege 801, 802 gebildet, die Anschlagflächen 803, 804 bilden. Die Stege 801 und 802 gehen entsprechend der Krümmung der Karte in längs verlaufende Stege 805 bzw. 806 über die seitliche Anlageflächen 807 und 808 bilden. Im Bereich der Stege 801, 802 und 805 und 806 ragen die entsprechenden Anlageflächen nach oben 803, 804, 807, 808 vom hinteren Auflageteil 62. Auch im Bereich von Stegen 809, 810 am mittleren Auflageteil 61 ragen die Anlageflächen 811, 812 ebenfalls nach oben. Beidseitig am vorderen Deckelteil 23 im Bereich der Stege oder Wände 281 sowie 282 ragen die entsprechenden Anlageflächen 291 und 292 nach unten.

Zum Zusammenbau des in Figur 4 gezeigten Chipkartenlesers 10 wird im allgemeinen zunächst der Simblock 22 mit Befestigungsstiften 120 auf der Leiterplatte 14 befestigt angeordnet sein. Erfindungsgemäß hat der Simblock einen Kartenanwesenheitsschalter 100 der durch die bereits erwähnte Aussparung 30 herausgeführt ist. Ein Schalterkontakt ist in Figur 4 mit 102 bezeichnet und wird beim Erreichen der Leseposition durch die Karte betätigt. Wenn die Karte in den Chipkartenleser eingesetzt werden soll, so geschieht dies in Figur 1 von rechts wobei die Karte die vorzugsweise leicht elastisch auslenkbaren Vorsprünge 51, 52 nach oben auslenkt und so über die Flächen 76, 26, 23, 25 und die Kontakte 13 des Simblocks 22 zum Anstoßen an die Anschlagefläche 29 der Anlagewand 28 in seine Endposition gleitet. Bei Erreichen dieser Endposition wird der Schalter 100 betätigt und die Karte kommt gleichzeitig mit ihrer Hinterkante mit den Anlageflächen 803, 804 in Berührung und ist so in der Kartenführung 11 rüttelsicher durch die seitlichen sowie vorderen und hinteren Anlagemittel 29, 803, 804 gehalten. Wenn die Karte herausgezogen werden soll, so greift der Benutzer in den Griffausschnitt 70 und hebt die Karte leicht an gegebenenfalls unter leichtem Hochbiegen der Vorsprünge 51, 52 und zieht die Karte heraus.

### Bezugszeichenliste

- 10: Smart-Card-Connector
- 11: (aufrastbare) Kartenführung
- 12: Kontaktblock, Simblock
- 13: Kontaktelemente
- 14: Leiterplatte
- 15: Befestigungsstift
- 16:
- 17:
- 18:
- 21: (obere) Gegenhalterungsmittel
- 22: (untere) Auflagemittel
- 23: vorderer Deckelteil
- 24: hinterer Deckelteil
- 25: vordere Kartengegenhalterungsfläche
- 26: hintere Kartengegenhalterungsfläche
- 27:
- 28: Anlagewand
- 29: Anschlagfläche
- 30: (Schalter) Aussparung
- 31: Rastmittel, Rasthaken
- 32: abgerundete Hinterkante
- 33:
- 40: Ausschnitt (Hinterschneidung)
- 41: Ausschnitt (Hinterschneidung)
- 42: Griffausschnitt
- 43: Abstand
- 44:
- 45: Vorderkante
- 46: abgerundete Hinterkante
- 50: Querstegteil
- 51: Vorsprung
- 52: Vorsprung
- 61: mittleres Auflageteil
- 62: hinteres Auflageteil
- 63: obere Auflagefläche
- 64: untere Auflagefläche
- 65: abgerundete Hinterkante
- 66: Breite
- 67: obere Auflage
- 68: untere Auflage
- 70: Griffausschnitt
- 71: Querstegteil
- 72: gewölbter Teil
- 73: Vorsprung
- 74: Vorsprung
- 75: Spalt
- 76: Spalt
- 77: Spalt
- 80: Steg
- 90: Rastmittel, Rasthaken
- 100: Schalter
- 102: Schaltkontakt
- 120: Befestigungsstift
- 162: Vorderkante
- 281: Steg, Wand
- 282: Steg, Wand
- 291: seitliche Führungs- und Halterungsfläche
- 292: seitliche Führungs- und Halterungsfläche
- 801: Anschlagsteg
- 802: Anschlagsteg
- 803: Auflageteil
- 804: Auflageteil
- 805: Steg, Wand
- 806: Steg, Wand
- 807: seitliche Führungs- und Halterungsfläche
- 808:
- 809: Steg, Wand
- 810: Steg, Wand
- 811: seitliche Führungs- und Halterungsfläche
- 812: seitliche Führungs- und Halterungsfläche

## Patentansprüche

1. Kartenführung bzw. Rahmenteil (11) insbesondere zur Verwendung mit einem Kontakt- oder Simblock (22), und insbesondere zur Anordnung auf einer Leiterplatte (14) wobei das Rahmenteil (11) folgendes aufweist: Kartenführungsmittel die die Karte beim Einsetzen in die Leseposition führen, und Kartenhalterungsmitteln die die Karte in der Leseposition fixieren, dadurch gekennzeichnet, daß die Kartenhalterungsmittel einen quer zur Karteneinsetzrichtung verlaufenden Anschlagsteg (801, 802) mit Kartenanlageflächen (803, 804) aufweisen, um die Karte in der Leseposition gegen Herausziehen zu sichern.

2. Kartenführung nach Anspruch 1 dadurch gekennzeichnet, daß der Steg (801, 802) durch einen Griffausschnitt (70) unterbrochen ist und zwei Stegteile (801, 802) bildet.

3. Kartenführung nach einem der vorhergehenden Ansprüche, dadurch gekennzeichnet, daß der Steg an einem hinteren unteren Auflageteil (62) ausgebildet ist und nach oben ragt.

4. Kartenführung nach einem der vorhergehenden Ansprüche, dadurch gekennzeichnet, daß entgegengesetzt zum Steg (801, 802) eine Anlagewand (28) vorgesehen ist, die nach unten ragt und eine Anschlagfläche (29) bildet und zwar vorzugsweise ausgehend von einem vorderen oberen Deckelteil (23).

5. Kartenführung nach einem der vorhergehenden Ansprüche, dadurch gekennzeichnet,
daß zwischen der Hinterkante (32) des vorderen Deckelteils (23) und der Vorderkante des mittleren Auflageteils (61) ein Spalt (77) vorgesehen ist, daß zwischen der Hinterkante des mittleren Auflageteils (61) und der Vorderkante (45) des hinteren Deckelteils (24) ein Spalt (76) vorgesehen ist; und daß zwischen der Hinterkante des hinteren Deckelteils (24) und der Vorderkante des hinteren Auflageteils (62) ein Spalt (75) vorgesehen ist.

6. Kartenführung nach einem der vorhergehenden Ansprüche, dadurch gekennzeichnet, daß Rastmittel vorzugsweise in der Form von Rasthaken (31) vorgesehen sind.

7. Kartenführung nach Anspruch 6, dadurch gekennzeichnet, daß Rasthaken (31) vorgesehen sind und zwar vorzugsweise zwei im Bereich des hinteren Deckelteils (23) und zwei im Bereich des vorderen Auflageteils (62).

8. Kartenführung nach einem der vorhergehenden Ansprüche, dadurch gekennzeichnet, daß sie einstückig aus Kunststoff hergestellt ist.

9. Kartenführung nach einem der vorhergehenden Ansprüche, dadurch gekennzeichnet, daß zwischen Anschlagsteg (801) und hinterem Deckelteil (24) ein Freiraum vorhanden ist.

10. Kartenführung nach einem der vorhergehenden Ansprüche, dadurch gekennzeichnet, daß die untere Auflagefläche (64) und das vordere Deckelteil (23) eine abgerundete Kante (65, 32) hat.
